# EUROPEAN PATENT APPLICATION

(11) **EP 4 246 648 A1**
(43) Date of publication of application: **20.09.2023**
(21) Application number: 22887471.5
(22) Date of filing: 19.10.2022
(51) Int. Cl.: H01M 10/058, H01M 10/42, H01M 4/525, H01M 4/505, H01M 4/131, H01M 10/052, H01M 4/02

(54) **LITHIUM SECONDARY BATTERY HAVING IGNITION SUPPRESSION STRUCTURE**

(30) Priority: 25.10.2021 KR 20210142601
(71) Applicant: LG Energy Solution, Ltd., Seoul 07335 (KR)
(72) Inventor: CHOI, Soon Hyung, Daejeon 34122 (KR)
(74) Representative: Plasseraud IP
(86) International application number: PCT/KR2022/015913
(87) International publication number: WO 2023/075275

(57) **Abstract**

Disclosed herein are a lithium secondary battery with ignition suppression structure and a manufacturing method of the lithium secondary battery. More specifically, provided is a method for suppressing ignition of the lithium secondary battery by locating a high-capacity unit including high-capacity unit cells with a high energy density on the upper part and the lower part of a low-capacity unit including low-capacity unit cells with a relatively low energy density.

## Description

### [Technical Field]

The present invention relates to a lithium secondary battery with ignition suppression structure. More specifically, the present invention is directed to provide a lithium secondary battery with a structure capable of suppressing ignition by adjusting the stacking positions of unit cells having different energy densities.

This application claims the benefit of priority based on Korean Patent Application No. 10-2021-0142601, filed on October 25, 2021, and the entire contents of the Korean patent application are incorporated herein by reference.

### [Background Technology of the Invention]

A lithium secondary battery is typically composed of a battery cell including a positive electrode, a negative electrode, an electrolyte, and a separation membrane. In the case of a pouch cell, which is a type of battery cell, has a form in which an electrode assembly, in which a single unit cell composed of a positive electrode, a negative electrode, and a separation membrane is multiply stacked, is housed together with an electrolyte in a pouch-shaped battery case.

An electrolyte and a separation membrane are important materials that affect the performance of a battery such as battery output and safety, but what directly determines the energy density of a battery is an electrode active material of a positive electrode and a negative electrode. In particular, a positive electrode active material has a greater influence on the energy density of a battery. While it is possible to increase the energy density of a battery by reducing the thickness of a current collector, which is an active material support, or by reducing the thickness of the separation membrane, it is only one of the indirect methods.

In current battery systems, lithium ions are initially contained in a positive electrode. When the battery is charged, lithium in the positive electrode is stored in the negative electrode made of a material such as graphite in a reduced state, and the positive electrode becomes oxidized, in other words, loses an electron for each lithium atom that is escaped. If these changes cannot be buffered, destructive changes such as decomposition or phase transition of a cathode material will occur, and repeated charging and discharging become impossible. Therefore, an element that can act as a buffer for the oxidation-reduction process without a destructive behavior is needed, and a transition metal element capable of a flexible change in oxidation number is included as a chemical component of the positive electrode. In addition, since a crystal structure, in which lithium ions can enter and exit reversibly, should be maintained, elements constituting a frame that will maintain the structure also should be included. As a result, cathode materials for lithium secondary batteries comprise three parts: a lithium that determines the charge capacity by passing between a positive electrode and a negative electrode, a transition metal that enables reversible redox reactions, and an oxide that serves as a frame to maintain the crystal structure.

In general, the energy density in the commercial voltage range increases as the content of nickel increases, but there may be a problem of becoming vulnerable in terms of stability.

As the battery case acts as an insulator, there may be cases in which the heat generated from the inside of the electrode assembly cannot be discharged to the outside, and this may cause ignition of the lithium secondary battery to occur due to overheating. Specifically, as the heat generated in each unit cell overlaps, the temperature inside the battery cell rises exponentially, resulting in overheating on the inside of the battery.

Because the energy density of lithium secondary battery is recently being increased, a method for suppressing the overheating phenomenon due to the overlap of heat generated in the unit cell as described above is desired.

### [Related Art]

Korean Patent Publication No. 10-2019-0024709

### [Description of the Invention]

### [Technical Problem]

The present invention is directed to provide a lithium secondary battery having a configuration capable of resolving an overheating phenomenon caused by an overlap of heat generated from multiple unit cells.

In addition, the present invention is directed to provide a lithium secondary battery having excellent thermal stability while maintaining energy density to a certain extent.

### [Technical Solution]

To solve the problems mentioned above, the lithium secondary battery with an ignition suppression structure, comprising: an electrode assembly comprising: a middle part including a first unit including a stack of first unit cells; and an upper part and a lower part, each including a second unit including a stack of second unit cells; and a battery case accommodating the electrode assembly.

In addition, the first unit may have a lower energy density than that of the second unit.

Moreover, each of the first and second unit cells comprises a negative electrode, a positive electrode, and a separation membrane interposed between the negative electrode and the positive electrode.

Here, the positive electrode either comprises a nickel compound containing nickel or a non-nickel compound that does not contain nickel.

Specifically, at least one of the first unit cells comprises a first positive electrode comprising a first nickel compound, a nickel content of the first nickel compound is less than 60 mol% based on 100 mol% of transition metal contained in the first nickel compound, at least one of the second unit cells comprises a second positive electrode comprising a second nickel compound and a nickel content of the second nickel compound included in the high-capacity unit cell is 60 mol% or more based on 100 mol% of the transition metal contained in the second nickel compound.

As another example, at least one of the first unit cells comprises a first positive electrode active material comprising a non-nickel compound and at least one of the second unit cells comprises a second positive electrode active material comprising a nickel compound.

Specifically, the nickel content of the nickel compound included in the at least one of the second unit cells is 60 mol% or more based on 100 mol% of transition metal contained in the nickel compound.

Or, the nickel content of the nickel compound included in the at least one of the second unit cells is 60 mol% or less based on 100 mol% of transition metal contained in the nickel compound.

Specifically, the nickel compound comprises an oxide of Formula 1 below.

[Formula 1] Lix[NiyCozMnwAv]O₂

where A is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, and v are 1.0≤x≤1.30, 0<y<1, 0<z≤0.6, 0<w≤0.6, 0≤v≤0.2, respectively.

For instance, the nickel compound includes one or more compounds selected from the group consisting of LiNiO₂, LiNi_{0.5}C_{0.5}O₂, LiNi_{0.6}Co_{0.4}O₂, LiNi_{1/3}Co_{1/3}Al_{1/3}O₂, LiNi_{1/3}Co_{1/3}Mn_{1/3}O₂, LiNi_{0.8}Co_{0.1}Mn_{0.1}O₂, LiNi_{0.5}Co_{0.3}Mn_{0.2}O₂, and LiNi_{0.7}Co_{0.1}Mn_{0.1}Al_{0.1}O₂.

Specifically, the non-nickel compound includes either an oxide of Formula 2 or an oxide of Formula 3 below.

[Formula 2] LiₚCo_{1-q}D_{q}O₄

[Formula 3] LiₐFe_{1-b}E_{b}O₄

where D is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q are 5≤p≤7, 0≤q≤0.2, respectively,
E is one or more elements selected from the group consisting of P, Al, Mg, Ni, Co, Mn, Ti, Ga, Cu, V, Nb, Zr, Ce, In, Zn, and Y, and
   a and b are 4≤a≤6,0≤b≤0.5, respectively.

For instance, the non-nickel compound includes one or more compounds selected from the group consisting of LiFePO₄, Li₆CoO₄, Li₆Co_{0.5}Zn_{0.5}O₄, Li₆Co_{0.7}Zn_{0.3}O₄, Li₂FeSiO₄, Li₅FeO₄, and Li₆FeO₄.

Moreover, the ratio of a number of first unit cells included in the first unit is 20 to 40% based on a total number of unit cells included in the electrode assembly.

### [Advantageous Effects]

According to the present invention, even if high-temperature heat is partially generated from the electrode assembly inside the battery cell, it has an effect of suppressing overheating and ignition of the lithium secondary battery.

### [Brief Description of the Drawings]

FIG. 1 illustrates a typical unit cell configuration.
FIG. 2 illustrates a lithium secondary battery including a typical electrode assembly and a battery case.
FIG. 3 shows the configuration of an electrode assembly of the present invention.
FIG. 4 illustrates the structure of an electrode assembly manufactured in the Examples and the Comparative Examples.
FIG. 5 is a graph illustrating initial capacity measurement results for secondary batteries in the Examples and the Comparative Examples.

### [Best Mode for Carrying Out the invention]

Hereinafter, a detailed configuration of the present invention will be described in detail with reference to the accompanying drawings and various embodiments. The embodiments described below are shown by way of an example to aid understanding of the present invention, and the accompanying drawings are not drawn to scale in order to aid understanding of the present invention, and the dimensions of some of the components may be exaggerated.

Since the present invention can make various changes and can take various forms, specific embodiments are illustrated in the drawings and described in detail in the text. However, it is not intended to limit the present invention to a specific disclosed form, and it should be understood to include all modifications, equivalents, or substitutes included in the spirit and technical scope of the present invention.

A battery cell 1000 generally includes an electrode assembly in which multiple unit cells are stacked.

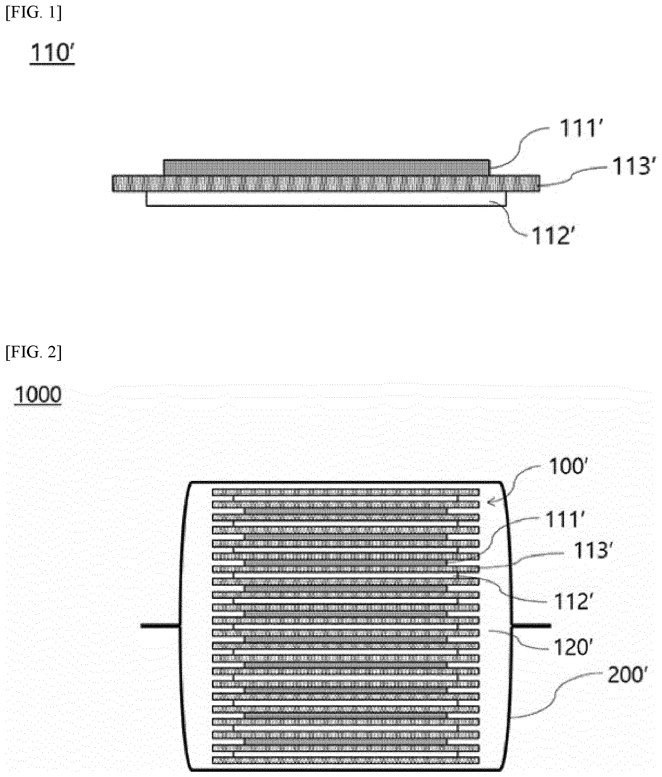

FIG. 1 illustrates a configuration of a unit cell 110' contained in a typical battery cell.

Referring to FIG. 1, the unit cell 110' takes a form in which a positive electrode 111', a negative electrode 112', and a separation membrane 113' interposed between the positive electrode 111' and the negative electrode 112' are stacked.

FIG. 2 exaggeratedly shows the configuration of a battery cell 1000 in the form of a typical pouch among the battery cells 1000.

Referring to FIG. 2, the battery cell 1000 includes an electrode assembly 100' in which multiple unit cells are stacked, a battery case 200' accommodating so as to surround the electrode assembly, and an electrolyte 120' injected and included inside the battery case 200'.

The battery cell 1000 including the positive electrode 111' active material with high energy density may internally generate high-temperature heat. Due to the sealed structure, the inside of the battery cell 1000 may be excessively overheated, and in severe cases, the battery cell 1000 may be ignited. When high-temperature heat is generated from the positive electrode 111' active material included in each of the multiple unit cells, the heat generated in each layer overlaps, and the inside of the battery case 200' may become an environment in which the temperature is beyond the ignition point that the battery cell 1000 can tolerate.

The lithium secondary battery of the present invention includes an electrode assembly 100 that contains multiple unit cells, and a battery cell 1000 that contains a battery case 200' accommodating the electrode assembly 100.

The unit cell includes a positive electrode including a positive electrode active material, a negative electrode including a negative electrode active material, and a separation membrane interposed between the positive electrode and the negative electrode. Although not illustrated, the positive electrode and the negative electrode are applied and included on the positive electrode current collector and the negative electrode current collector, respectively.

Materials used in the field of lithium secondary battery technology are sufficient for the positive electrode current collector and the negative electrode current collector of the present invention. Since the current collector configurations are far from the characteristics of the present invention, they will be excluded from the description for the convenience of understanding.

The positive electrode and the negative electrode may further include a conductive material to improve conductivity, and may further include a binder, etc. that helps the positive electrode active material and the negative electrode active material to settle on the current collector.

A general negative electrode active material used in the field of lithium secondary battery technology is sufficient for the negative electrode active material of the present invention, and it is not particularly limited in the present invention. For example, the negative electrode active material may include graphite or the like.

A general separation membrane used in the field of lithium secondary battery technology is sufficient for the separation membrane of the present invention, and it is not particularly limited in the present invention. A material that has pores through which lithium ions can pass and has an insulating property is sufficient for the separation membrane. For instance, the separation membrane may include polyethylene (PE), polypropylene (PP), etc.

The positive electrode active material contains lithium, an oxide serving as a frame to maintain the crystal structure, and a transition metal that allows for reversible redox reactions. The transition metal includes one of the materials selected from the group consisting of nickel, cobalt, aluminum, manganese, iron, zinc, magnesium, copper, cerium, lanthanum, tungsten, vanadium, chromium, titanium, zirconium, indium, tantalum, yttrium, strontium, gallium, scandium, gadolinium, samarium, calcium, niobium and molybdenum, and combinations thereof. More specifically, the positive electrode active material of the present invention may include at least one of an oxide of Formula 1, an oxide of Formula 2, and an oxide of Formula 3 below.

[Formula 1] Liₓ[Ni_{y}Co_{z}Mn_{w}Aᵥ]O₂

[Formula 2] LiₚCo_{1-q}D_{q}O₄

[Formula 3] LiₐFe_{1-b}E_{b}O₄

From the Formula 1 to the Formula 3,
A is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are 1.0≤x≤1.30, 0<y<1, 0<z≤0.6, 0<w≤0.6, 0≤v≤0.2, respectively.
D is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q are 5≤p≤7, 0≤q≤0.2, respectively,
E is one or more elements selected from the group consisting of P, Al, Mg, Ni, Co, Mn, Ti, Ga, Cu, V, Nb, Zr, Ce, In, Zn, and Y,
and a and b are 4≤a≤6,0≤b≤0.5, respectively.

Lithium nickel cobalt oxide represented by the Formula 1 is a composite metal oxide containing lithium and nickel, and may include one or more of the compounds selected from the group consisting of LiNiO₂, LiNi_{0.5}C_{0.5}O₂, LiNi_{0.6}Co_{0.4}O₂, LiNi_{1/3}Co_{1/3}Al_{1/3}O₂, LiMnO₂, LiNi_{1/3}Co_{1/3}Mn_{1/3}O₂, LiNi_{0.8}Co_{0.1}Mn_{0.1}O₂, LiNi_{0.5}Co_{0.3}Mn_{0.2}O₂, and LiNi_{0.7}Co_{0.1}Mn_{0.1}Al_{0.1}O₂.

In addition, an oxide represented by the Formula 2 may include Li₆CoO₄, Li₆Co_{0.5}Zn_{0.5}O₄, Li₆Co_{0.7}Zn_{0.3}O₄, etc., and an oxide represented by Formula 3 may include LiFePO₄, Li₂FeSiO₄, Li₅FeO₄, Li₆FeO₄, etc.

The battery cell 1000 of the present invention includes an electrode assembly 100 containing multiple unit cells and a battery case 200' accommodating the electrode assembly 100.

The battery cell 1000 of the present invention additionally includes an electrolyte inside the battery case 200'. The electrolyte passes through the separation membrane and serves as a medium enabling exchange of lithium cations between the positive electrode active material and the negative electrode active material. The electrolyte may be in a solid form or a liquid form, and a general electrolyte used in the field of lithium secondary battery technology is sufficient. For example, in the case of an electrolyte in a liquid form, the electrolyte may include a lithium salt serving as a passage for lithium cation movement, a solvent for dissolving the lithium salt, and an additive added to improve the characteristics of the battery cell 1000 such as lifespan, output, etc.

The electrode assembly 100 of the present invention includes a low-capacity unit L in which low-capacity unit cells 110l are stacked and a high-capacity unit H in which high-capacity unit cells 110h are stacked.

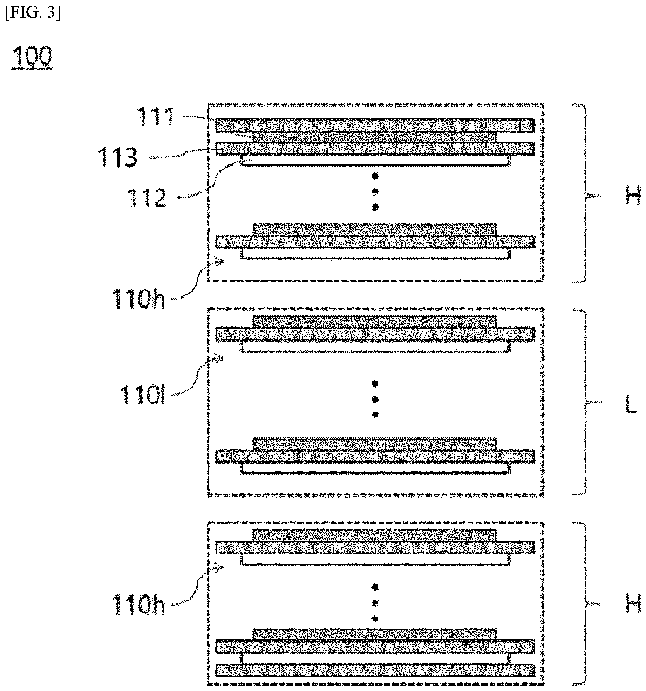

FIG. 3 simply shows a configuration of the electrode assembly 100 included in the battery cell 1000 of the present invention.

Referring to FIG. 3, the electrode assembly 100 is formed by stacking multiple unit cells in which a positive electrode, a negative electrode, and a separation membrane interposed between the positive electrode and the negative electrode are used as a single basic unit.

Specifically, the electrode assembly 100 is formed by stacking a positive electrode, a separation membrane, and a negative electrode in order. An insulating film (or a separation membrane) is further included between the unit cells to prevent a short circuit, or a bipolar current collector in which a positive electrode is included on one side and a negative electrode is included on the other side may be further included. In the electrode assembly 100, the active material is protected in the bottommost part and the topmost part, and an insulating film (or a separation membrane) may be further included to avoid direct contact between the battery case 200' and the active material.

The unit cell of the present invention may be classified into a low-capacity unit cell 110l and a high-capacity unit cell 110h. Specifically, the unit cell is composed of a low-capacity unit cell 110l and a high-capacity unit cell 110h, which has a higher energy density than that of a low-capacity unit cell 110l.

Here, the degree of energy density of the unit cell is affected by the energy density of the positive electrode active material included in the unit cell. That is, the energy density of the positive electrode active material included in the low-capacity unit cell 110l is lower than that of the positive electrode active material included in the high-capacity unit cell 110h.

The electrode assembly 100 of the present invention includes a low-capacity unit L in which low-capacity unit cells 110l are stacked and a high-capacity unit H in which high-capacity unit cells 110h are stacked.

The electrode assembly 100 of the present invention includes a low-capacity unit L in the middle and a high-capacity unit H located in the upper part and lower part of the low-capacity unit L.

Each of the low-capacity unit L and the high-capacity unit H may be composed of one or more unit cells. It is most preferable for the low-capacity unit L to be composed of low-capacity unit cells 110l and the high-capacity unit H to be composed of high-capacity unit cells 110h. However, it is not limited thereto, and even if the high-capacity unit cell 110h is included in the low-capacity unit L, it is acceptable as long as the energy density of all the unit cells constituting the low-capacity unit L is lower than the energy density of all unit cells constituting the high-capacity unit H. In contrast, even if the low-capacity unit cells 110l are included in the high-capacity unit H, it is acceptable as long as the energy density of all the unit cells constituting the high-capacity unit H is greater than the energy density of all the unit cells constituting the low-capacity unit L.

When energy densities are compared for each part of the electrode assembly 100, the energy density of the low-capacity unit L is preferably lower than that of the high-capacity unit H. For a better understanding, FIG. 3 shows the most preferable case, in which only the high-capacity unit cells 110h are included in the high-capacity unit H of the electrode assembly 100, and only the low-capacity unit cells 110l are included in the low-capacity unit L.

In general, the temperature inside the electrode assembly 100 rises in the process of charging and discharging or overcharging the lithium secondary battery. The cause of the rise in the temperature lies in the chemical reaction occurring in each unit cell. That is, electrons and lithium cations are generated and moved by chemical reactions at the positive electrode and the negative electrode by charging and discharging, and heat is generated as a by-product of the reaction.

Because of the unique structure of the battery cell 1000 in which the electrode assembly 100 is sealed with the battery case 200', the temperature difference between the inside and the outside of the battery cell 1000 becomes significant. In general, the inside of the battery cell 1000 may be 40 to 80 degrees higher than the outside. In particular, the temperature inside the battery cell 1000 where the electrode assembly 100 is located may rise to an extent that the battery cell 1000 is ignited in extreme situations such as overcharging.

Since the electrode assembly 100 includes heat-generating unit cells stacked in numbers, the heat generated in each unit cell can be overlapped, and the inside of the battery cell 1000 may be in a very high-temperature environment due to the overlapping heat. In particular, the overlapping heat intensifies as it gets closer to the middle layer of the electrode assembly 100. Therefore, there is a need for a method capable of mitigating the high-temperature heat generated by the overlapping heat.

In general, the extent of energy density of a positive electrode active material has a great influence on the amount of the heat generated. In the case of the present invention, since the total energy density of the high-capacity unit cell 110h included in the high-capacity unit H is greater than the total energy density of the low-capacity unit cell 110l included in the low-capacity unit L, the temperature increase in the high-capacity unit H is greater. The energy density of the positive electrode active material is related to the heat resistance of the positive electrode active material. That is, a positive electrode active material with a high energy density is less resistant to heat, and a positive electrode active material with a low energy density is more resistant to heat. Because a positive electrode active material that exhibits heat resistance is less sensitive to heat than a positive electrode active material that exhibits vulnerability to heat, unit cells including a positive electrode active material having the heat resistance has a relatively low rise in temperature even under extreme situations such as overcharging.

In conclusion, the increase in temperature of the low-capacity unit L including low-capacity unit cells 110l within the electrode assembly 100 becomes smaller than the increase in temperature of the high-capacity unit H including high-capacity unit cells 110h.

The main feature of the present invention is to relieve overlapping heat within the electrode assembly 100 by positioning the high-capacity unit H in the upper part and the lower part of the low-capacity unit L. That is, the feature of the present invention is to relieve high-temperature heat generated and overlapped in the high-capacity unit H to some extent in the low-capacity unit L by positioning the high-capacity unit H with a high energy density in the upper part and lower part of the low-capacity unit L with a relatively low energy density, respectively. A single electrode assembly 100 preferably includes one low-capacity unit L and two high-capacity units H. Here, it is preferable to design the number of high-capacity unit cells 110h so that the energy densities of each of the high-capacity units H are equal to each other. That is, as the energy densities of the two high-capacity units H become equal to or similar to each other, the temperature mitigation effect of the present invention may be improved.

The ratio of the number of low-capacity unit cells 110l constituting the low-capacity unit L of the present invention is preferably 20 to 40% based on the total number of unit cells included in the electrode assembly 100. In other words, it can be expressed that the low-capacity unit L occupies 20 to 40% of the entire electrode assembly 100. Here, if the low-capacity unit cells 110l are less than 20%, it is difficult to achieve the effect of mitigating heat generated from the high-capacity unit cells 110h inside the battery cell 1000. In addition, if the low-capacity unit cells 110l exceeds 40%, a sufficient battery performance cannot be expected even if the temperature mitigation effect can be achieved.

The positive electrode active material of the present invention may be classified into a nickel compound containing nickel and a non-nickel compound not containing nickel.

As described above, the criterion for distinguishing the low-capacity unit cell 110l and the high-capacity unit cell 110h of the present invention is in the energy density of the positive electrode active material. Matters affecting the energy density of the positive electrode active material include: whether or not nickel is included, and how much nickel it contains.

In other words, the positive electrode active material included in the low-capacity unit cell 110l of the present invention preferably includes either a nickel compound containing less than 60 mol% of nickel based on 100 mol% of the transition metal, or a non-nickel compound.

### [Mode for Carrying Out the invention]

### (First Embodiment)

The first embodiment relates to a case in which the positive electrode active material of the low-capacity unit cell includes a nickel compound. More precisely, it relates to the case where the transition metal included in the positive electrode active material of the present invention includes a nickel compound.

The nickel compound includes any one of nickel-cobalt-manganese (NCM), nickel-cobalt-aluminum (NCA), and nickel-cobalt-manganese-aluminum (NCMA). The energy density of the positive electrode active material increases in proportion to the nickel content included in the nickel-compound. That is, if the nickel content of the nickel-compound is high, the energy density of the unit cell increases, and the temperature increase becomes greater as the heat resistance is relatively low. Conversely, if the nickel content of the nickel-compound is low, the energy density of the unit cell decreases, and the temperature increase becomes smaller as the heat resistance is relatively high. As a result, the low-capacity unit L of the electrode assembly of the present invention has a relatively smaller energy density than the high-capacity unit H, resulting in a small temperature increase by having a high heat resistance.

The transition metal included in the positive electrode active material of the low-capacity unit cell preferably contains less than 60 mol% of nickel based on 100 mol% of the transition metal. Here, if the nickel content exceeds 60 mol%, it may be difficult to fully expect a temperature mitigation effect.

In contrast to the low-capacity unit cell, the transition metal included in the positive electrode active material of the high-capacity unit cell contains 60 mol% or more of nickel based on 100 mol% of the transition metal. Here, if the nickel content of the positive electrode active material included in the high-capacity unit cell is less than 60 mol%, it may be difficult to expect a sufficient battery performance.

As a result, when heat is generated in the electrode assembly included in the battery cell 1000 due to charging and discharging, the internal temperature of the battery cell 1000 can be alleviated by the low-capacity unit L. In addition, an effect capable of preventing ignition of the battery cell 1000 in extreme situations such as overcharging may be obtained.

### (Second Embodiment)

The second embodiment relates to a case in which the positive electrode active material of the low-capacity unit cell includes a non-nickel compound. In this case, the positive electrode active material of the high-capacity unit cell included in the contrasting high-capacity unit H includes a nickel-compound.

The non-nickel compound contains any one of lithium-iron-phosphate (LFP), lithium-cobalt oxide (LCO), lithium-manganese oxide (LMO), lithium-iron phosphate (LFP), and lithium-titanium oxide (LTO).

When the positive electrode active material included in the low-capacity unit cell includes a non-nickel compound, the energy density may be lower than that of the positive electrode active material containing a nickel-compound, and the positive electrode active material has high heat resistance, so the temperature increase becomes small.

When the positive electrode active material of the low-capacity unit cell included in the low-capacity unit L of the present invention includes the non-nickel compound, the energy density decreases and the temperature increase becomes smaller in the low-capacity unit L compared to the high-capacity unit H.

As a result, when heat is generated in the electrode assembly included in the battery cell 1000 due to charging and discharging, the internal temperature of the battery cell 1000 can be alleviated by the low-capacity unit L. In addition, an effect capable of preventing ignition of the battery cell 1000 in extreme situations such as overcharging can be obtained.

As above, the present invention has been described in detail through drawings and exemplary embodiments. However, the configurations described in the drawings or embodiments in this specification are only one embodiment of the present invention, and do not represent all the technical ideas of the present invention. Therefore, it should be understood that various equivalents and modifications that can replace them may exist at the time of this application.

Hereinafter, the present invention will be described in more detail through specific examples. However, these examples are intended to illustrate the present invention, and the scope of the present invention is not limited thereto.

### Examples 1 to 2 and Comparative Examples 1 to 4.

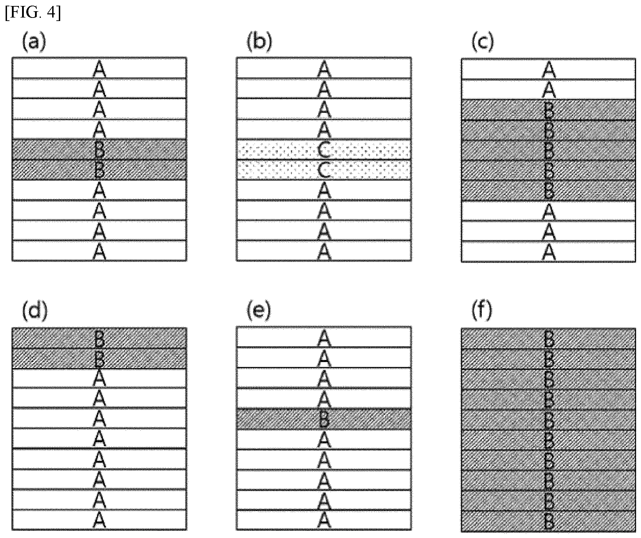

After manufacturing 6 electrode assemblies in which 10 unit cells are stacked as shown in FIG. 4, the electrode assembly is sealed with a pouch-type battery case to manufacture battery cells of Example 1, Example 2, and Comparative Examples 1 to 4. Here, the same material was used for the separation membrane, the electrolyte, the negative electrode, the current collector, etc., and the battery cells were manufactured by varying the types of positive electrode active materials and the number of low-capacity unit cells as shown in Table 1 below. In addition, the position of the unit cell stacked on each electrode assembly was designed as shown in FIG. 4(a) to FIG. 4(f). However, the content of the positive electrode active material included in the positive electrode of each unit cell was all the same.

**[Table 1]**

| | Composition | Low-capacity unit cell | Positive electrode active material of low-capacity unit cell B | Positive electrode active material of high-capacity unit cell A |
|---|---|---|---|---|
| Example 1 | (a) | 2 | NCM 532 | NCM622 |
| Example 2 | (b) | 2 | LFP* | NCM622 |
| Comparative Example 1 | (c) | 5 | NCM 532 | NCM622 |
| Comparative Example 2 | (d) | 2 | NCM 532 | NCM622 |
| Comparative Example 3 | (e) | 1 | NCM 532 | NCM622 |
| Comparative Example 4 | (f) | 10 | NCM 532 | NCM622 |
| *LFP= LiFePO₄ | | | | |

### Experimental Example.

In order to evaluate the performance of the secondary battery according to the present invention, the following experiments were performed.

### a) Evaluation of battery heat generation during charging and discharging

Overcharging was performed on the secondary batteries manufactured in Examples and Comparative Examples, and surface temperature and internal temperature of the overcharged secondary batteries were measured. Specifically, a thermal sensor was installed inside the case of each target secondary batteries, and after charging to 4.2V, the charged battery was overcharged at a constant current of 1A until it reached 10V. Then, a constant voltage of 10V was maintained for 6 hours. When 6 hours have elapsed, the internal temperature of the battery was measured with a thermal sensor installed in each secondary battery, and the surface of each secondary battery was photographed with a thermal imaging camera to measure the temperature of the secondary battery three times, and the average value was calculated to determine the surface temperature of the battery when overcharged. The measured results are shown in Table 2 below.

### b) Comparison of initial capacity

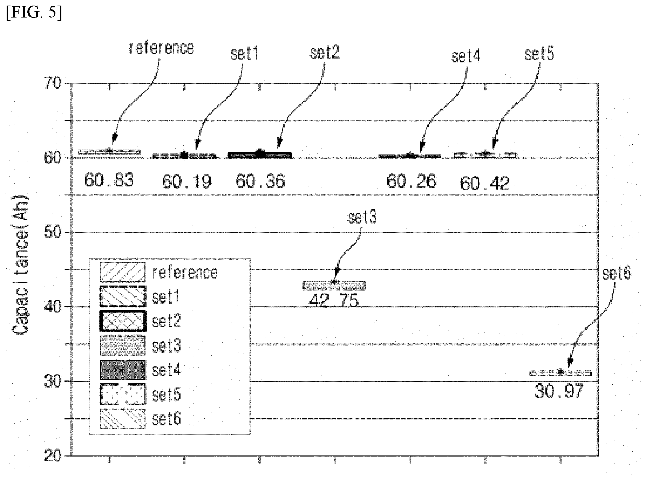

In a state that each manufactured battery is maintained at 45°C, it was charged in a CC (Constant Current) mode of 1/3C until the voltage reached 4.2V Then, after it was discharged in CC (Constant Current) mode of 0.33C until the voltage reached 2.5V, an additional discharge was performed in CV (Constant Voltage) mode until the current value was reduced to 0.05% of the initial current value, then the initial discharge capacity was confirmed, and the results were represented in Table 2 and FIG. 5 below.

In this case, the result of the initial capacity of the assembled secondary battery (symbol: reference) applied a positive electrode active material only to NCM622 is written in FIG. 5 in order to objectively compare the initial capacity result of the examples and comparative examples.

**[Table 2]**

| | Symbol | Temperature (°C) | Initial Capacity (Ah) |
|---|---|---|---|
| Example 1 | Set1 | 46±1°C | 60.19 |
| Example 2 | Set2 | 44±1°C | 60.36 |
| Comparative Example 1 | Set3 | 32±1°C | 42.75 |
| Comparative Example 2 | Set4 | 53±1°C | 60.26 |
| Comparative Example 3 | Set5 | 59±1°C | 60.42 |
| Comparative Example 4 | Set6 | 39±1°C | 30.97 |

As shown in Table 2, it can be seen that the secondary battery according to the present invention can minimize heat generation during charging and discharging.

Specifically, referring to the results of Table 2 and FIG. 5, Comparative Example 1 measured a lower temperature inside the cell than in Example 1, but it can be seen that the initial capacity of the secondary battery is very low. Comparative Example 2 has an initial capacity of 60.26Ah, which is almost the same as that of Example 1, but it can be seen that the temperature inside the cell is measured relatively high. Comparative Example 3 measured a slightly higher initial capacity than in Example 1, but it can be seen that the temperature inside the cell is measured to be slightly higher. Comparative Example 4 measured a lower temperature inside the cell than in Example 1, but it was found that the performance of the secondary battery was somewhat inferior by having the lowest initial capacity. The initial capacity is the most affected result by the energy density of the secondary battery. Therefore, it can be seen that the secondary battery having the characteristics of the present invention has an excellent thermal stability without a significant decrease in energy density

### [Reference Numerals]

1000: BATTERY CELL
100, 100': ELECTRODE ASSEMBLY
200': BATTERY CASE
110': UNIT CELL
110h: HIGH-CAPACITY UNIT CELL
110l: LOW-CAPACITY UNIT CELL
111': POSITIVE ELECTRODE
112': NEGATIVE ELECTRODE
111c, 112c: CONDUCTIVE MATERIAL
113': SEPARATION MEMBRANE
120': ELECTROLYTE
H: HIGH-CAPACITY UNIT
L: LOW-CAPACITY UNIT

## Claims

1. A lithium secondary battery with an ignition suppression structure, comprising: an electrode assembly comprising:
a middle part including a first unit including a stack of first unit cells; and
an upper part and a lower part, each including a second unit including a stack of second unit cells; and
a battery case accommodating the electrode assembly.

2. The lithium secondary battery with an ignition suppression structure of claim 1, wherein the first unit has a lower energy density than that of the second unit.

3. The lithium secondary battery with an ignition suppression structure of claim 1, wherein each of the first and second unit cells comprises:
a negative electrode,
a positive electrode, and
a separation membrane interposed between the negative electrode and the positive electrode.

4. The lithium secondary battery with an ignition suppression structure of claim 3, wherein the positive electrode either comprises a nickel compound containing nickel or a non-nickel compound that does not contain nickel.

5. The lithium secondary battery with an ignition suppression structure of claim 3, wherein
at least one of the first unit cells comprises a first positive electrode comprising a first nickel compound,
a nickel content of the first nickel compound is less than 60 mol% based on 100 mol% of transition metal contained in the first nickel compound,
at least one of the second unit cells comprises a second positive electrode comprising a second nickel compound and
a nickel content of the second nickel compound included in the high-capacity unit cell is 60 mol% or more based on 100 mol% of the transition metal contained in the second nickel compound.

6. The lithium secondary battery with an ignition suppression structure of claim 4, wherein
at least one of the first unit cells comprises a first positive electrode active material comprising a non-nickel compound and
at least one of the second unit cells comprises a second positive electrode active material comprising a nickel compound.

7. The lithium secondary battery with an ignition suppression structure of claim 6, wherein the nickel content of the nickel compound included in the at least one of the second unit cells is 60 mol% or more based on 100 mol% of transition metal contained in the nickel compound.

8. The lithium secondary battery with an ignition suppression structure of claim 6, wherein the nickel content of the nickel compound included in the at least one of the second unit cells is 60 mol% or less based on 100 mol% of transition metal contained in the nickel compound.

9. The lithium secondary battery with an ignition suppression structure of claim 4, wherein the nickel compound comprises an oxide of Formula 1:
[Formula 1] Lix[NiyCozMnwAv]O₂
where A is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, and v are 1.0≤x≤1.30, 0<y<1, 0<z≤0.6, 0<w≤0.6, 0≤v≤0.2, respectively.

10. The lithium secondary battery with an ignition suppression structure of claim 4, wherein the nickel compound includes one or more compounds selected from the group consisting of LiNiO₂, LiNi_{0.5}C_{0.5}O₂, LiNi_{0.6}Co_{0.4}O₂, LiNi_{1/3}Co_{1/3}Al_{1/3}O₂, LiNi_{1/3}Co_{1/3}Mn_{1/3}O₂, LiNi_{0.8}Co_{0.1}Mn_{0.1}O₂, LiNi_{0.5}Co_{0.3}Mn_{0.2}O₂, and LiNi_{0.7}Co_{0.1}Mn_{0.1}Al_{0.1}O₂.

11. The lithium secondary battery with an ignition suppression structure of claim 4, wherein the non-nickel compound includes either an oxide of Formula 2 or an oxide of Formula 3:
[Formula 2] LiₚCo_{1-q}D_{q}O₄
[Formula 3] LiₐFe_{1-b}E_{b}O₄
where D is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
p and q are 5≤p≤7, 0≤q≤0.2, respectively,
E is one or more elements selected from the group consisting of P, Al, Mg, Ni, Co, Mn, Ti, Ga, Cu, V, Nb, Zr, Ce, In, Zn, and Y, and
a and b are 4≤a≤6,0≤b≤0.5, respectively.

12. The lithium secondary battery with an ignition suppression structure of claim 4, wherein the non-nickel compound includes one or more compounds selected from the group consisting of LiFePO₄, Li₆CoO₄, Li₆Co_{0.5}Zn_{0.5}O₄, Li₆Co_{0.7}Zn_{0.3}O₄, Li₂FeSiO₄, Li₅FeO₄, and Li₆FeO₄.

13. The lithium secondary battery with an ignition suppression structure of claim 1, wherein a ratio of a number of first unit cells included in the first unit is 20 to 40% based on a total number of unit cells included in the electrode assembly.
